(19) Europäisches Patentamt / European Patent Office / Office européen des brevets

(11) **EP 4 545 406 B1**

(12) **FASCICULE DE BREVET EUROPEEN**

(45) Date de publication et mention de la délivrance du brevet:
**25.02.2026   Bulletin 2026/09**

(21) Numéro de dépôt: **24182083.6**

(22) Date de dépôt: **13.06.2024**

(51) Classification Internationale des Brevets (IPC):
**B64C 27/12** *(2006.01)*     **B64D 31/12** *(2006.01)*
**B64D 35/08** *(2025.01)*     **F02C 9/42** *(2006.01)*
**F02C 7/36** *(2006.01)*

(52) Classification Coopérative des Brevets (CPC):
**B64D 31/12; B64C 27/12; B64D 35/08; F02C 7/36; F02C 9/42;** F05D 2270/02; F05D 2270/052

(54) **PROCÉDÉ DE CONTRÔLE D'UN GIRAVION, GIRAVION ET  PROGRAMME D ORDINATEUR ASSOCIES**

VERFAHREN ZUR STEUERUNG EINES DREHFLÜGLERS, ENTSPRECHENDES DREHFLÜGELFLUGZEUG UND ENTSPRECHENDES COMPUTERPROGRAMM

METHOD FOR CONTROLLING A ROTORCRAFT, ASSOCIATED ROTORCRAFT AND COMPUTER PROGRAM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:   **26.10.2023   FR 2311651**

(43) Date de publication de la demande:
**30.04.2025   Bulletin 2025/18**

(73) Titulaire: **Airbus Helicopters**
**13725 Marignane Cedex (FR)**

(72) Inventeur: **MORET, Robin**
**13170 Les Pennes Mirabeau (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 3 251 955        US-A1- 2013 054 053**
**US-A1- 2014 283 527    US-A1- 2016 221 685**
**US-A1- 2019 382 124**

**Description**

La présente invention concerne un procédé de contrôle d'un giravion, un giravion et un programme d'ordinateur associés au procédé de contrôle.

Un giravion comporte au moins un rotor participant à sa sustentation, voire à sa propulsion.

Par exemple, un giravion peut comprendre un rotor principal participant à sa sustentation et à sa propulsion, ce rotor principal ayant des pales à pas variable collectivement et cycliquement. De plus, le giravion peut comprendre un système participant au contrôle du mouvement en lacet, tel qu'un autre rotor principal ou un rotor arrière par exemple. Le système de contrôle du pas est activable par exemple par le pilote ou l'équipage. Alternativement, le système est activable par un système de contrôle automatique, dit pilote automatique.

Pour mettre en mouvement le ou les rotors, le giravion comporte une installation motrice éventuellement multimoteur, et une chaine de transmission de puissance allant des moteurs à un ou des rotors.

Par exemple, deux moteurs sont connectés à une boite de transmission de puissance, cette boite de transmission de puissance mettant en mouvement le ou les rotors. La boîte de transmission de puissance comporte alors une entrée mécanique par moteur, les entrées mécaniques étant en prise avec un combinateur, le combinateur entrainant une sortie mécanique de la boite de transmission de puissance par rotor. Les entrées moteur, le combinateur, et les sorties mécaniques peuvent comprendre au moins un pignon ou une roue dentée, au moins un arbre, au moins un étage de réduction de vitesse...

Les moteurs peuvent être des moteurs thermiques possédant un arbre de sortie mis en mouvement via la combustion de carburant.

Par exemple, au moins un moteur peut être un turbomoteur muni d'un générateur de gaz et d'une turbine libre de travail connectée à l'arbre de sortie.

Chaque moteur peut être piloté par un système de régulation connu sous l'acronyme FADEC et l'expression anglaise « Full Authority Digital Engine Control ». Un tel système de régulation comporte un calculateur moteur en communication avec des senseurs mesurant des valeurs de paramètres de fonctionnement du moteur piloté, voire du giravion, tels qu'une vitesse de rotation d'un générateur de gaz ou d'une turbine libre, une température interne, une vitesse de rotation d'un rotor du giravion.

Ce calculateur moteur est alors configuré pour piloter un doseur de carburant alimentant le moteur associé afin, par exemple, de stabiliser une vitesse de rotation de l'arbre de sortie à une vitesse de consigne, quelle que soit la puissance consommée par cet arbre de sortie. Cette puissance varie en fonction des actions d'un pilote sur des commandes de vol, en particulier sur des commandes faisant varier collectivement et/ou cycliquement le pas des pales du rotor principal sur un hélicoptère. Alternativement, ces commandes peuvent être actionnées par un système de pilotage automatique.

La régulation en fonction de la vitesse de rotation (N2) de l'arbre de sortie du turbomoteur assure alors une adéquation permanente entre la puissance produite par les arbres de sortie des moteurs et la puissance consommée par le ou les rotors, de manière à ce que ce ou ces rotors tournent à une vitesse de rotation nominale compatible avec leur fonction de génération de sustentation du giravion.

Néanmoins, le calculateur moteur est configuré pour éviter que la puissance développée par un moteur génère le dépassement d'une limite mécanique acceptable par le moteur ou la chaîne de transmission. Usuellement, divers régimes de fonctionnement associés à des limites et des durées d'utilisation propres sont alors définis. Pour chaque régime de fonctionnement, ces limites peuvent comprendre, par exemple, une limite de couple d'un couple moteur délivré par un moteur, une limite d'une température interne d'un moteur, une limite de vitesse de rotation d'un arbre d'un moteur, une limite de couple d'au moins un organe de la chaine de transmission...

Sur un aéronef multimoteur, on connait des régimes de fonctionnement dits « AEO », pour l'expression anglaise « All Engines Operative » utilisables pendant certaines durées lorsque tous les moteurs fonctionnent normalement, et des régimes de fonctionnement dits « OEI », pour l'expression anglaise « One Engine Inoperative » utilisables pendant certaines durées lorsqu'un des moteurs est en panne. L'utilisation de certains régimes de fonctionnement peut induire une action de maintenance sur les moteurs, voire sur la chaîne de transmission de puissance.

Dès lors, un calculateur moteur pilote le doseur de carburant de manière à moduler la puissance du moteur associé. Un premier type de régulation consiste à faire tendre la vitesse de rotation de l'arbre de sortie vers une valeur de consigne, tout en évitant de dépasser une limite. Ce type de régulation est dénommée régulation en N2 car est dépendante de la vitesse de rotation de l'arbre de sortie du moteur associé.

Un autre type de régulation consiste à délivrer une puissance prédéfinie pour le moteur, par exemple pour atteindre un point de fonctionnement optimal en termes de rendement thermodynamique.

Toutefois dans le cas d'un giravion, il est avantageux qu'au moins un des moteurs soit régulé en fonction de la vitesse de rotation N2 de son arbre de sortie. En effet, une telle régulation dite « en N2 » permet d'éviter une diminution régulière de la vitesse de rotation NR du rotor de sustentation qui est elle-même directement liée à la vitesse de rotation N2.

Quand une limite est atteinte, le calculateur moteur limite le débit carburant transmis au moteur, et par conséquent la puissance délivrée par son arbre de sortie devient inférieure à la puissance nécessaire. Le pilote doit alors agir sur les commandes de vol pour réduire la puissance nécessaire au vol,

A cet effet, le giravion peut comprendre divers indicateurs permettant à un pilote d'évaluer la situation. Ces indicateurs peuvent comprendre un indicateur indiquant la vitesse de rotation du rotor principal et les limites associées, des indicateurs moteurs indiquant les valeurs courantes des paramètres de surveillance du moteur (température, régime, couple) et les limites associées, des indicateurs indiquant les valeurs courantes des paramètres de surveillance de la chaîne de transmission de puissance et les limites associées, un indicateur de première limitation affichant une information relative au paramètre le plus proche d'une de ces limites, parmi plusieurs paramètres surveillés.

Par ailleurs, en cas de défaillance ou de panne du système de régulation d'un moteur, le débit de carburant alimentant le moteur concerné est figé à la dernière valeur de débit utilisée. Un pilote en est informé et peut alors soit couper le moteur concerné par sécurité, soit poursuivre le vol en l'état, c'est-à-dire avec un moteur non régulé en N2.

En cas de poursuite du vol en l'état, le pilote doit s'assurer qu'aucune limite de la chaîne de transmission mécanique ne soit dépassée. Sur un giravion bimoteur, si un appel de puissance est effectué par un pilote pour effectuer une manœuvre, la somme des puissances délivrées par le moteur régulé en N2 et le moteur non régulé en N2 pourrait devenir supérieure à la valeur admissible par le combinateur d'une boîte de transmission de puissance par exemple.

De manière plus générale, la gestion d'une absence de régulation, qui peut être volontaire ou accidentelle, d'un des moteurs d'un giravion peut demander une charge de travail supplémentaire à l'équipage pour ne pas dépasser une limite de la chaîne de transmission mécanique.

En outre, les documents US 2019/382124, US 2014/283527, US 2016/221685, EP 3251955 et US 2013/054053 concernent d'autres procédés de contrôle de giravions connus.

La présente invention a alors pour objet de proposer un procédé permettant de limiter la charge de travail d'un équipage en présence d'une défaillance d'un système de régulation d'un moteur sur un giravion multimoteur ou en l'absence de régulation d'un des moteurs. En outre, ce procédé peut permettre à un pilote d'effectuer des manœuvres de pilotage en toute sécurité, sans risquer de dégrader la chaîne de transmission mécanique du giravion.

L'invention se rapporte donc à un procédé de contrôle d'un giravion, le giravion comportant, au moins deux moteurs à combustion, au moins un système de régulation et un système de transmission, lesdits au moins deux moteurs étant reliés mécaniquement au système de transmission respectivement par au moins deux accouplements.

Selon l'invention, un tel procédé de contrôle est remarquable en ce qu'il comporte au moins les étapes suivantes :

- identification d'au moins un moteur dit régulé en N2 parmi lesdits au moins deux moteurs, ledit au moins un moteur régulé en N2 étant identifié comme un moteur alimenté en carburant avec un débit de carburant régulé en fonction de la vitesse de rotation N2 d'au moins un premier arbre de sortie dudit au moins un moteur régulé en N2 et fourni par au moins un premier doseur de carburant piloté en fonction d'une consigne de débit transmise par au moins un premier système de régulation dépendant de la vitesse de rotation N2 dudit au moins un premier arbre de sortie,

- identification d'un moteur dit non régulé en N2' parmi lesdits au moins deux moteurs, le moteur non régulé en N2' étant identifié comme un moteur alimenté en carburant avec un débit de carburant non régulé en fonction de la vitesse de rotation N2' d'un second arbre de sortie du moteur non régulé en N2' et fourni par un second doseur de carburant étant soit non régulé, soit piloté en fonction d'une consigne de débit transmise par au moins un second système de régulation indépendant de la vitesse de rotation N2' du second arbre de sortie,

- détermination d'au moins une première limite de couple d'entrée admissible pour au moins un premier accouplement du système de transmission relié audit au moins un premier arbre de sortie ,

- détermination d'une seconde limite de couple d'entrée admissible pour un second accouplement du système de transmission relié au second arbre de sortie,

- détermination d'un premier couple courant de fonctionnement transmis par ledit second arbre de sortie au second accouplement du système de transmission,

- détermination d'au moins une limite de couple combinée résiduelle admissible pour au moins un organe d'un combinateur du système de transmission, ladite au moins une limite de couple combinée résiduelle étant calculée selon la formule :

$$CR1 = \mathrm{Cadm} - (\mathrm{C1} * \mathrm{Z})$$

où Cadm est une limite de couple combinée admissible pour ledit au moins un organe du combinateur, C1 est le premier couple courant de fonctionnement transmis par le second arbre de sortie au second accouplement du système de transmission, et

Z un coefficient de réduction entre une vitesse de rotation du second accouplement et une vitesse de rotation dudit au moins un organe du combinateur,

- identification d'une limite critique de couple comme étant la plus petite des valeurs parmi lesdites au moins une première limite de couple d'entrée, seconde limite de couple d'entré et au moins une limite de couple combinée résiduelle,

- génération d'une limite de consigne de commande dudit au moins un premier système de régulation, la limite de consigne de commande étant générée en fonction de ladite limite critique de couple.

L'étape d'identification d'un moteur non régulé en N2' peut être mise en œuvre de différentes manières. Par exemple, sur un aéronef ayant des moteurs identiques devant fonctionner de la même manière, cette étape peut comporter une détection d'un fonctionnement asymétrique des moteurs en détectant éventuellement un dépassement d'un écart prédéterminé entre un premier débit carburant fourni par un premier doseur de carburant alimentant en carburant un moteur et un second débit carburant fourni par un second doseur de carburant alimentant en carburant un autre moteur.

Selon un autre exemple, un moteur non régulé en N2' peut être identifié lorsque le débit de carburant admis par son doseur de carburant est constant dans un intervalle de temps ou varie en suivant un paramètre de régulation différent de la vitesse de rotation N2' du second arbre de sortie.

Selon un autre exemple, un moteur non régulé en N2' peut être identifié lorsque le débit de carburant admis par son doseur de carburant, et donc la position du doseur, ne correspond pas à une consigne de dédit ou de position du doseur qu'il reçoit.

Une telle étape d'identification d'un moteur non régulé en N2' peut être mise en en œuvre au moyen d'un système de contrôle relié par voie filaire ou non filaire à un ou plusieurs systèmes de régulation comportant un ou des calculateurs moteurs, tels des FADEC, gérant les consignes de débit de carburant de chaque moteur. Un contrôleur du système de contrôle peut ainsi identifier les moteurs régulés en N2 et les moteurs non régulés en N2'.

En outre, chaque moteur régulé en N2 peut être identifié lorsque le débit de carburant correspondant est variable dans un intervalle de temps prédéterminé en suivant un paramètre de régulation dépendant de la vitesse de rotation N2 de chaque premier arbre de sortie.

Par ailleurs, les étapes de détermination des première et seconde limites de couple d'entrée peuvent être mise en œuvre par des calculs, essais ou simulations préalablement à un vol du giravion. Les première et seconde limites de couple d'entrée sont alors transmises et mémorisées par le système de contrôle dans le giravion.

L'étape de détermination d'un premier couple courant peut être mise en œuvre par le système de contrôle, par exemple, par une mesure de couple effectuée sur les arbres d'entrée du système de transmission au moyen de senseurs tels que des couplemètres ou encore à partir d'une information de puissance et de vitesse de rotation transmises par des calculateurs moteurs de chacun des moteurs régulés en N2 et non régulés en N2'.

En outre, les valeurs de limite de couple admissible Cadm et de coefficient de réduction Z peuvent être déterminées par des tests au sol, des essais en vol ou encore par des simulations.

Les valeurs de limite de couple admissible Cadm et de coefficient de réduction Z peuvent ainsi être mémorisées préalablement à une mission du giravion dans au moins une mémoire embarquée dans le giravion.

L'étape de détermination d'au moins une limite de couple combinée résiduelle est quant à elle mise en œuvre en vol après avoir identifié un moteur non régulé en N2'. En effet, le contrôleur du système de contrôle peut calculer la ou les limites de couple combinées résiduelles à partir d'une part d'au moins une limite de couple combinée admissible du ou des organes d'un combinateur du système de transmission et d'autre part du premier couple courant de fonctionnement transmis par le moteur non régulé en N2'.

Ladite limite de couple combinée admissible pour un organe respectif du combinateur peut être quant à elle déterminée par des calculs, essais ou simulations préalablement à un vol du giravion. La ou les limites de couple combinées admissibles sont donc des valeurs prédéterminées transmises et mémorisées dans une mémoire du système de contrôle dans le giravion.

Le contrôleur du système de contrôle identifie alors la limite critique de couple en comparant les valeurs desdites au moins une première limite de couple d'entrée, seconde limite de couple d'entrée et au moins une limite de couple combinée résiduelle.

En fonction de cette limite critique de couple, l'étape de génération d'une limite de consigne de commande dudit au moins un premier système de régulation permet de contrôler sans intervention du pilote, voire de limiter, la puissance totale transmise conjointement par les moteurs, régulés en N2 et non régulés en N2', au système de transmission pour éviter le dépassement d'une limite de couple d'entrée ou d'une limite de couple combinée. Cette limitation de la puissance transmise au système de transmission peut notamment être effectuée manuellement par un pilote du giravion ou automatiquement par système de pilotage automatique pour respecter la limite de consigne de commande du ou des premiers système de régulation.

Un tel procédé de contrôle permet ainsi de protéger les organes d'un système de transmission, et notamment en limitant le couple transmis par des moteurs à une chaîne de transmission de puissance, dans le cas d'une absence de régulation d'un des moteurs.

Par ailleurs, chacune des première et seconde limites de couple d'entrée peut être définie pour une durée maximale d'utilisation de la limite correspondant à un régime de fonctionnement particulier. Plusieurs premières limites de couple d'entrée d'un premier accouplement peuvent alors former un premier ensemble de limites de couple d'entrée et plusieurs secondes limites de couple d'entrée d'un second accouplement peuvent alors former un second ensemble de limites de couple d'entrée.

Par suite, chacune des limites de couple combinée résiduelle peut également être définie pour une durée maximale d'utilisation de la limite correspondant à un régime de fonctionnement particulier. Plusieurs limites de couple combinées résiduelles d'un organe du combinateur peuvent alors former un ensemble de limites de couple combinées résiduelles.

En outre, la limite de couple combinée résiduelle d'un ensemble correspondant à un régime de fonctionnement est comparée avec les limites de couple d'entrée du premier ensemble et du second ensemble correspondant à ce même régime de fonctionnement.

Autrement dit, le procédé de contrôle peut mettre en œuvre simultanément ou séquentiellement plusieurs identifications d'une limite critique de couple pour plusieurs régimes de fonctionnement.

En pratique, préalablement à l'identification d'un moteur non régulé en N2' le moteur non régulé en N2' peut être initialement un moteur régulé en N2' qui est alimenté en carburant avec un débit de carburant régulé fourni par le second doseur de carburant piloté en fonction d'une consigne de débit transmise par un second système de régulation.

En d'autres termes, l'identification d'un moteur non régulé en N2' peut être effectuée en vol et faire suite à une commande réalisée volontairement par le pilote par exemple à des fins d'entraînement au pilotage. L'identification d'un moteur non régulé en N2' peut également être réalisée en vol et faire suite à un problème technique.

En pratique, l'identification d'un moteur non régulé en N2' peut être une identification une défaillance du second système de régulation.

Une telle défaillance peut par exemple consister en une panne survenue au niveau d'une des cartes électroniques du second système de régulation et peut être détectée en identifiant une incohérence entre des données d'entrée. Comme précédemment indiqué cette défaillance du second système de régulation peut en effet être identifiée lorsque le débit de carburant admis par un doseur de carburant ne cherche pas à se rapprocher de la consigne de débit reçue.

Selon un autre aspect avantageux, la limite de consigne de commande peut être générée pour qu'un second couple courant de fonctionnement transmis par le au moins un premier arbre de sortie audit au moins un premier accouplement du système de transmission soit maintenu égal ou inférieur à la limite critique de couple.

En outre, le respect la limite de consigne de commande peut être mis en œuvre en commandant une réduction de la consigne de commande d'un ou plusieurs systèmes de régulation ou en commandant une réduction d'un pas collectif des pales d'un rotor de sustentation à l'aide d'un levier de pas collectif. En effet, une telle réduction du pas collectif des pales permet de réduire la puissance nécessaire à l'entraînement en rotation du rotor à une vitesse de rotation prédéterminée fonction du régime de fonctionnement courant.

Par ailleurs, lorsque la limite critique de couple est une desdites au moins une première limite de couple d'entrée et seconde limite de couple d'entrée, ledit au moins un premier système de régulation peut réguler le débit de carburant fourni par ledit au moins un premier doseur de carburant en fonction d'une première consigne de vitesse de rotation Nrref1 d'au moins un rotor de sustentation.

En pratique, cette première consigne de vitesse de rotation Nrref1 peut être égale à une valeur de référence prédéterminée ou calculée à partir d'une valeur de référence prédéterminée et par exemple être égale à 105% d'une valeur de référence prédéterminée. Une telle première consigne de vitesse de rotation peut correspondre à un ou des premiers régimes de fonctionnement du giravion dans lequel un moteur parmi tous les moteurs n'est pas apte à transmettre un couple moteur au rotor.

En outre, la première consigne de vitesse de rotation Nrref1 peut être déterminée par des tests au sol, des essais en vol ou encore par des simulations.

Cette première consigne de vitesse de rotation Nrref1 peut ainsi être mémorisée préalablement à une mission du giravion dans au moins une mémoire embarquée dans le giravion.

En revanche, lorsque la limite critique de couple est ladite au moins une limite de couple combinée résiduelle, ledit au moins un premier système de régulation peut réguler le débit de carburant fourni par ledit au moins un premier doseur de carburant en fonction d'une seconde consigne de vitesse de rotation Nrref2 dudit au moins un rotor de sustentation, la seconde consigne de vitesse de rotation Nrref2 étant inférieure à la première consigne de vitesse de rotation Nrref1.

Dans ce cas, cette seconde consigne de vitesse de rotation Nrref2 peut être égale à une valeur de référence prédéterminée ou calculée à partir d'une valeur de référence prédéterminée et par exemple être égale à 100% d'une valeur de référence prédéterminée. Cette seconde consigne de vitesse de rotation peut correspondre à un ou des seconds régimes de fonctionnement du giravion dans lequel tous les moteurs sont aptes à transmettre un couple moteur au rotor de sustentation.

En outre, cette seconde consigne de vitesse de rotation Nrref2 peut également être déterminée par des tests au sol, des essais en vol ou encore par des simulations.

Cette seconde consigne de vitesse de rotation Nrref2 peut ainsi être mémorisée préalablement à une mission du giravion dans au moins une mémoire embarquée dans le giravion.

En outre, le procédé de contrôle peut comprendre un affichage d'informations utiles au pilotage sur un afficheur agencé dans le giravion ou en dehors du giravion.

Selon une première alternative, lorsque la limite critique de couple est une desdites au moins une première limite de couple d'entrée et seconde limite de couple d'entrée, le procédé peut comporter les étapes suivantes :

- génération d'une information représentative d'un premier régime de fonctionnement, et
- affichage sur un afficheur d'au moins un premier indicateur de limite correspondant au premier régime de fonctionnement.

Un tel au moins un premier indicateur de limite peut alors par exemple comporter un index en regard d'une échelle graduée. L'index est alors représentatif d'une valeur courante de couple moteur transmis par les moteurs. Un tel index peut ainsi se déplacer relativement par rapport à l'échelle par exemple en fonction des conditions de vol et des manœuvres réalisées par le giravion.

En pratique, une valeur de la limite critique de couple peut être affectée à un premier indicateur de limite parmi lesdits au moins un premier indicateur de limite.

Ainsi, un repère de l'échelle graduée du premier indicateur de limite OEI peut être représentatif de cette valeur courante de ladite d'au moins une limite critique de couple. Un tel repère constitue alors une valeur de seuil à ne pas franchir pour respecter un niveau de sollicitation prédéterminé du ou des moteurs en fonctionnement pendant une durée de vol maximale.

En outre, plusieurs repères de l'échelle graduée peuvent être affichés simultanément et peuvent représenter différentes valeurs de seuil à ne pas franchir pour respecter différents niveaux de sollicitation selon ce premier régime de fonctionnement. Chaque niveau de sollicitation prédéterminé peut correspondre alors à une durée d'utilisation maximale prédéterminée de la limite correspondante.

Selon une seconde alternative, lorsque la limite critique de couple est la limite de couple combinée résiduelle, le procédé peut comporter les étapes suivantes :

- génération d'une information représentative d'un second régime de fonctionnement, et
- affichage sur un afficheur d'au moins un second indicateur de limite correspondant au second régime de fonctionnement.

Comme précédemment dans le premier régime de fonctionnement, un tel au moins un second indicateur de limite peut alors par exemple comporter un index et une échelle graduée. L'index est alors représentatif d'une valeur courante de couple transmis par les moteurs.

En pratique, la ou les valeurs de ladite d'au moins une limite critique de couple ne sont dans ce cas pas affectées audit au moins un second indicateur de limite.

Avantageusement, le procédé peut comporter les étapes suivantes :

- détermination préliminaire de valeurs de seuil desdits au moins un premier indicateur de limite au moins un second indicateur de limite, et
- mémorisation des valeurs de seuil dans au moins une mémoire.

Autrement dit, les valeurs de seuil desdits au moins un premier indicateur de limite et au moins un second indicateur de limite peuvent être déterminées en amont d'une mission du giravion par exemple par des tests sur banc, par des essais en vol ou encore par simulation.

Le système de contrôle comporte alors une mémoire permettant de stocker les différentes valeurs de seuil desdits au moins un premier indicateur de limite et au moins un second indicateur de limite.

Une telle mémoire est alors avantageusement embarquée dans le giravion.

Selon un autre exemple de réalisation avantageux, le giravion comportant un système de pilotage automatique et au moins un rotor de sustentation muni de pales, le procédé peut comporter un calcul d'une marge de pas collectif applicable aux pales et un contrôle d'un pas collectif des pales pour piloter automatiquement le giravion en respectant ladite au moins une limite critique de couple.

En d'autres termes, le système de contrôle peut être relié à un système de pilotage automatique du giravion permettant de le piloter selon quatre axes tels un axe de roulis, un axe de tangage, un axe de lacet et un axe de pas collectif. Le contrôleur du système de contrôle peut alors générer et transmettre au système de pilotage automatique une ou des marges de puissance ou encore directement des marges de pas collectif applicables aux pales. Le système de contrôle peut également transmettre au système de pilotage automatique soit une information représentative du premier régime de fonctionnement desdits au moins deux moteurs, soit une information représentative du second régime de fonctionnement courant desdits au moins deux moteurs.

La présente invention a également pour objet un giravion comportant au moins deux moteurs à combustion, au moins un système de régulation et un système de transmission, lesdits au moins deux moteurs étant reliés mécaniquement au système de transmission respectivement par au moins deux accouplements.

Un tel giravion est remarquable en ce qu'il comporte un système de contrôle configuré pour mettre en œuvre le procédé de contrôle précité.

**Un tel système** de contrôle est alors intégré au giravion et constitue à ce titre un équipement du giravion. Le système de contrôle peut alors être relié à un dispositif de gestion de vol du giravion et à un système de pilotage automatique.

Un tel système de contrôle peut notamment comporter un calculateur et une mémoire.

La présente invention a aussi pour objet un programme d'ordinateur comprenant des instructions qui, lorsque le programme est exécuté par le système de contrôle du giravion précédemment décrit, conduisent à mettre en œuvre le procédé de contrôle précité.

Le programme d'ordinateur est par exemple exécuté par un ordinateur ou un calculateur, comprenant au moins un processeur, au moins un circuit intégré, au moins un système programmable, au moins un circuit logique, et une mémoire, ces exemples ne limitant pas la portée donnée à l'expression « ordinateur » ou « calculateur ».

La mémoire permet de stocker le programme d'ordinateur ainsi que différentes informations utilisées par le programme d'ordinateur, à savoir les consignes de commande à transmettre auxdits actionneurs, la valeur courante d'un premier couple courant de fonctionnement transmis par le second arbre de sortie au second accouplement du système de transmission, des première et seconde limites de couple d'entrée admissibles pour au moins un premier accouplement et un second accouplement du système de transmission, de la ou des limites de couple combinées résiduelles admissibles pour au moins un organe d'un combinateur du système de transmission et de la limite critique de couple.

Une telle mémoire permet également de stocker l'information représentative du premier régime de fonctionnement ou l'information représentative du second mode de fonctionnement.

L'invention et ses avantages apparaîtront avec plus de détails dans le cadre de la description qui suit avec des exemples donnés à titre illustratif en référence aux figures annexées qui représentent :

la figure 1, un schéma en vue de côté d'un giravion conforme à l'invention,

la figure 2, un logigramme illustrant un procédé de contrôle conforme à l'invention,

la figure 3, un logigramme illustrant une première variante du procédé de contrôle conforme à l'invention, et

la figure 4, un logigramme illustrant une deuxième variante du procédé de contrôle conforme à l'invention.

Les éléments présents dans plusieurs figures distinctes sont affectés d'une seule et même référence.

Comme déjà évoqué, l'invention concerne un procédé de contrôle d'un giravion.

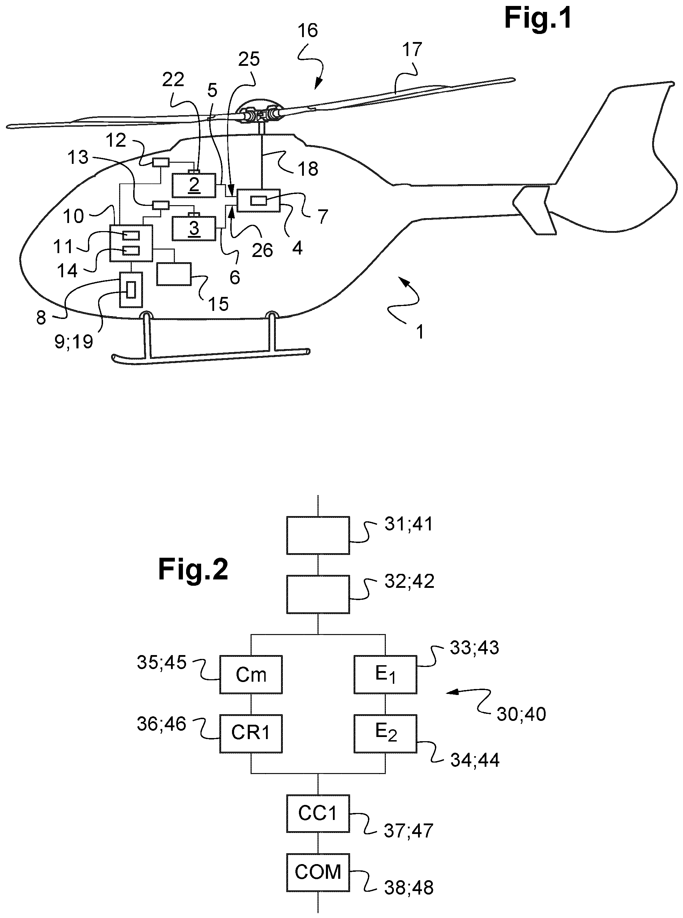

Tel que représenté à la figure 1, un tel giravion 1 comporte au moins deux moteurs 2, 3 à combustion, dont un premier moteur 2 et un deuxième moteur 3. Les moteurs 2, 3 sont aptes à transmettre chacun un couple moteur, via un système de transmission 4, à au moins un rotor de sustentation 16 assurant au moins une sustentation dans l'air du giravion 1. Les moteurs 2, 3 sont ainsi connectés au système de transmission 4 qui est connecté à au moins un rotor de sustentation 16 muni de pales 17.

Le système de transmission 4 comporte au moins un premier accouplement 25 connecté avec au moins un premier arbre de sortie 5 du premier moteur 2 et un second accouplement 26 connecté avec un second arbre de sortie 6 du second moteur 3 et au moins un arbre de sortie 18 relié au rotor de sustentation 16.

Le système de transmission 4 comporte plusieurs organes internes tels des engrenages, des étages de réduction de vitesse et au moins un combinateur 7 par exemple.

En outre, un tel giravion 1 comporte également au moins un premier système de régulation 12 permettant de réguler l'admission de carburant du premier moteur 2. Eventuellement, le giravion 1 peut comporter un second système de régulation 13 permettant de modifier l'admission en carburant du second moteur 3.

Par ailleurs, le premier moteur 2 est alimenté en carburant par un premier doseur de carburant 22 contrôlé par le premier système de régulation 12. Le premier moteur 2 est ainsi désigné par la suite comme étant un moteur régulé en N2 correspondant à la vitesse de rotation N2 du premier arbre de sortie 5. Le premier doseur de carburant 22 est alors apte à modifier un débit de carburant transmis au moteur 2 régulé en N2 en fonction d'une consigne de position ou de débit transmise par le premier système de régulation 12.

Par ailleurs, le second moteur 3 peut être alimenté en carburant par un second doseur de carburant 23 contrôlé par un second système de régulation 13 dont la régulation n'est pas en N2' correspondant à la vitesse de rotation N2' du second arbre de sortie 6, ou alors sans être contrôlé par le second système de régulation 13 lorsqu'il est en panne ou se bloque. Le second moteur 3 peut alternativement ne pas être régulé en N2'. Le second moteur 3 peut ainsi être désigné par la suite comme étant un moteur non régulé en N2' dans le cadre du procédé de l'invention.

Le procédé de contrôle selon l'invention est alors mis en œuvre par un système de contrôle 10 relié par voie filaire ou non filaire au moins au premier système de régulation 12, voire également au second système de régulation 13 lorsque ce dernier est présent. Un tel système de contrôle 10 peut comprendre, par exemple, un contrôleur 11 comprenant un ou plusieurs senseurs, un ou plusieurs calculateurs et au moins une mémoire 14, au moins un circuit intégré, au moins un système programmable, au moins un circuit logique, ces exemples ne limitant pas la portée donnée à l'expression « système de contrôle ». Le terme calculateur peut désigner aussi bien un processeur, une unité centrale de traitement connue sous l'acronyme CPU, une unité graphique de traitement GPU, une unité digitale connue sous l'acronyme DSP, un microcontrôleur...

En outre, la mémoire 14 peut permettre de stocker un programme d'ordinateur mettant en œuvre le procédé de contrôle selon l'invention.

Par ailleurs, le contrôleur 11 du système de contrôle 10 est configuré pour déterminer si un moteur est un moteur régulé en N2 ou non régulé en N2'.

Tel que représenté aux figures 2 à 4, le procédé de contrôle 30, 40 comporte alors une identification 31, 41, par le contrôleur 11, d'un moteur régulé en N2 2 parmi les au moins deux moteurs 2, 3 et une identification 32, 42, par le contrôleur 11, d'un moteur non régulé en N2' 3 parmi les au moins deux moteurs 2, 3.

En outre comme précédemment indiqué, le moteur non régulé en N2' peut être un moteur configuré pour ne pas être régulé en N2' ou un moteur initialement régulé en N2'. Hors cas de panne, ce moteur est donc alimenté en carburant avec un débit de carburant régulé en N2' fourni par le second doseur de carburant 23 piloté en fonction d'une consigne de débit transmise par le second système de régulation 13. L'identification 32 d'un moteur non régulé en N2' 3 peut ainsi être mise en œuvre en identifiant une défaillance du second système de régulation 13.

Une fois le ou les moteurs régulés en N2 2 et le moteur non régulé en N2' 3 identifiés, le procédé de contrôle 30, 40 comporte une détermination 33, 43 d'au moins une première limite de couple d'entrée E1 admissible pour le ou les premiers accouplements 25 du système de transmission 4 et une détermination 34, 44 d'une seconde limite de couple d'entrée E2 admissible pour le second accouplement 26 du système de transmission 4.

La ou les premières limites de couple d'entrée E1 et la seconde limite de couple d'entrée E2 admissibles peuvent être déterminées préliminairement à une mission courante du giravion 1 par des essais en vol, des tests sur banc ou des simulations. Ces première et seconde limites de couple d'entrée E1, E2 peuvent alors être stockées dans la mémoire 14 du système de contrôle 10.

Un tel procédé de contrôle 30, 40 comporte ensuite une détermination 35, 45 d'un premier couple courant de fonctionnement C1 transmis par le second arbre de sortie 6 au second accouplement 26

Un tel premier couple courant de fonctionnement C1 peut notamment être déterminé par un calcul réalisé par le contrôleur 11 du système de contrôle 10 à partir d'une puissance courante délivrée par le moteur non régulé en N2' 3 et d'une vitesse de rotation du second arbre de sortie 6.

Un tel premier couple courant de fonctionnement C1 peut également être mesuré par des capteurs de couple. Par capteur, on entend ici un capteur physique capable de mesurer directement le paramètre en question, en l'occurrence le premier couple courant de fonctionnement, mais aussi un système pouvant comprendre un ou plusieurs capteur(s) physique(s) ainsi que des moyens de traitement du signal permettant de fournir une estimation du paramètre en question à partir des mesures fournies par ces capteurs physiques.

Par ailleurs, le procédé de contrôle 30, 40 comporte une détermination 34, 44 d'au moins une limite de couple combinée résiduelle CR1 admissible pour au moins un organe du combinateur 7 du système de transmission 4. Une telle au moins une limite de couple combinée résiduelle CR1 est en outre calculée par le contrôleur 11 du système de contrôle 10 en fonction du premier couple courant de fonctionnement C1 transmis par le second arbre 6 du moteur non régulé en N2' 3.

Une limite de couple combinée résiduelle CR1 est ainsi égale à la différence entre une limite de couple combinée admissible Cadm pour un organe du combinateur 7 et le produit entre le premier couple courant de fonctionnement C1 et un coefficient de réduction Z entre une vitesse de rotation du second accouplement 26 et une vitesse de rotation de l'organe du combinateur 7.

En outre, cette limite de couple admissible Cadm peut être déterminée préliminairement à une mission courante du giravion 1 par des essais en vol, des tests sur banc ou des simulations. Cette limite de couple admissible Cadm peut également être stockée dans la mémoire 14 du système de contrôle 10.

Le procédé de contrôle 30, 40 comporte alors une identification 37, 47 par le contrôleur 11 du système de contrôle 10 d'au moins une limite critique de couple CC1. Une telle limite critique de couple CC1 est alors identifiée comme étant la plus petite des valeurs parmi la ou les premières limites de couple d'entrée E1, la seconde limite de couple d'entrée E2 et la ou les limites de couple combinées résiduelles CR1.

Le procédé de contrôle 30, 40 comporte enfin une génération 38, 48 d'une limite de consigne de commande COM du ou des premiers systèmes de régulation 22 pour le ou les moteurs 2 régulés en N2. Une telle limite de consigne de commande COM est alors générée par le contrôleur 11 du système de contrôle 10 en fonction de ladite au moins une limite critique de couple CC1. Cette étape de génération 38 de la limite de consigne de commande COM du ou des premier systèmes de régulation 22 permet en effet de limiter automatiquement la puissance totale transmise conjointement par les moteurs 2 et 3, au système de transmission 4 pour éviter le dépassement d'une limite de couple d'entrée E1, E2 ou d'une limite de couple combinée résiduelles CR1.

Le système de contrôle 10 peut ainsi limiter la consigne de commande COM afin de respecter cette au moins une limite critique de couple CC1.

En outre, lorsque la limite critique de couple CC1 est une desdites au moins une première limite de couple d'entrée E1 et seconde limite de couple d'entrée E2, ledit au moins un premier système de régulation 12 peut réguler le débit de carburant fourni par le premier doseur de carburant 22 associé en fonction d'une première consigne de vitesse de rotation Nrref1 d'au moins un rotor de sustentation 16 du giravion 1. Une telle première consigne de vitesse de rotation Nrref1 peut par ailleurs correspondre à une vitesse de rotation nominale du ou des rotors de sustentation 16 ou être calculée à partir de la vitesse de rotation nominale en étant égale par exemple à 105% de la vitesse de rotation nominale. Cette première consigne de vitesse de rotation Nrref1 est en outre par exemple utilisée lorsque l'un des moteurs 2 ou 3 ne transmet pas de couple moteur à l'un des premier et second arbres d'entrée 5, 6.

En revanche, lorsque la limite critique de couple CC1 est ladite au moins une limite de couple combinée résiduelle CR1, ledit au moins un premier système de régulation 12 peut réguler le débit de carburant fourni par ledit au moins un premier doseur de carburant 22 en fonction d'une seconde consigne de vitesse de rotation Nrref2 du ou des rotors de sustentation 16, la seconde consigne de vitesse de rotation Nrref2 étant inférieure à la première consigne de vitesse de rotation Nrref1.

Une telle seconde consigne de vitesse de rotation Nrref2 peut quant à elle correspondre à une vitesse de rotation égale à 100% de la vitesse de rotation nominale du ou des rotors de sustentation 16. Cette seconde consigne de vitesse de rotation Nrref2 peut être utilisée lorsque chacun des moteurs 2 et 3 transmet un couple moteur respectivement aux premier et second arbres d'entrée 5, 6.

Le système de contrôle 10 peut alors limiter la puissance délivrée par le ou les moteurs 2 régulés en N2 selon la limite critique de couple CC1.

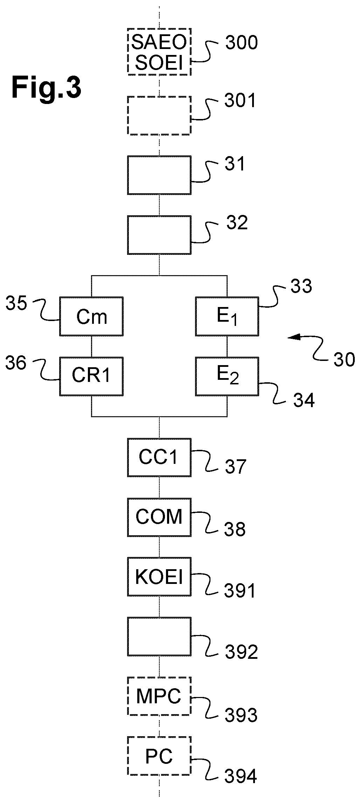

Tel que représenté à la figure 3, lorsque ladite d'au moins une limite critique de couple CC1 est une desdites au moins une première ou seconde limites de couple d'entrée E1, E2, le procédé 30 peut comporter une génération 391 d'une information KOEI représentative d'un fonctionnement asymétrique, dit OEI, desdits au moins deux moteurs 2, 3.

Dans ce cas, le procédé 30 comporte alors un affichage 392 sur un afficheur 8 d'au moins un indicateur de limite OEI 9 correspondant au fonctionnement asymétrique OEI.

Un tel afficheur 8 est par exemple formé par un écran équipant un tableau de bord d'un cockpit du giravion 1 ou encore par un système d'affichage tête haute porté par un pilote et agencé par exemple sur un casque ou des lunettes.

Dans ce cas l'afficheur 8 est alors relié par voie filaire ou non filaire au système de contrôle 10 et peut afficher une valeur de la limite critique de couple CC1 sur l'indicateur de limite OEI 9 conformément à un fonctionnement asymétrique OEI des moteurs 2, 3.

Selon un autre exemple de réalisation, un tel afficheur 8 peut également être déporté en dehors du giravion 1 par exemple lorsque celui-ci est piloté à distance.

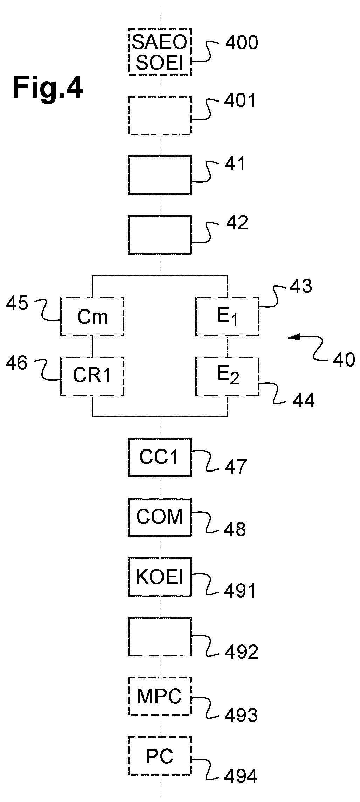

Tel que représenté à la figure 4, lorsque ladite d'au moins une limite critique de couple CC1 est ladite au moins une limite de couple combinée résiduelle CR1, un tel procédé 40 peut alors comporter une génération 491 d'une information KAEO représentative d'un fonctionnement symétrique, dit AEO, desdits au moins deux moteurs 2, 3, et un affichage 48 sur l'afficheur 8 d'au moins un indicateur de limite AEO 19 correspondant au fonctionnement symétrique AEO.

En outre, tel que représenté aux figures 3 et 4, le procédé de contrôle 30, 40 peut comporter une détermination préliminaire 300, 400 de valeurs de seuil SAEO, SOEI desdits au moins un indicateur de limite AEO 19 et au moins un indicateur de limite OEI 9.

Par ailleurs, le procédé de contrôle 30, 40 peut comporter mémorisation 301, 401 des valeurs de seuil SAEO, SOEI desdits au moins un indicateur de limite AEO 19 et au moins un indicateur de limite OEI 9.

En outre, le giravion 1 peut également comporter un système de pilotage automatique 15, qui a la capacité d'agir sur le pas collectif des pales du ou des rotors de sustentation 16. Un tel système de pilotage automatique 15 est alors relié par voie filaire ou non filaire au système de contrôle 10.

Le procédé 30, 40 peut alors comporter un calcul 393, 493 des marges de pas collectif MPC applicables auxdites pales 17. Le calcul 393, 493 peut être mis en œuvre par le système de contrôle 10 qui le transmet au système de pilotage automatique 15.

Le procédé 30, 40 peut alors comporter un contrôle 394, 494 d'un pas collectif PC des pales 17 pour piloter automatiquement le giravion 1 en respectant ladite au moins une limite critique de couple CC1.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé de contrôle (30, 40) d'un giravion (1), ledit giravion (1) comportant au moins deux moteurs (2, 3) à combustion, au moins un système de régulation (12, 13) et un système de transmission (4), lesdits au moins deux moteurs (2, 3) étant reliés mécaniquement audit système de transmission (4) respectivement par au moins deux accouplements (25, 26),
   **caractérisé en ce que** le procédé de contrôle (30, 40) comporte au moins les étapes suivantes :

   - identification (31, 41) d'au moins un moteur dit régulé en N2 (2) parmi lesdits au moins deux moteurs (2, 3), ledit au moins un moteur régulé en N2 (2) étant identifié comme un moteur alimenté en carburant avec un débit de carburant régulé en fonction de la vitesse de rotation N2 d'au moins un premier arbre de sortie (5) dudit au moins un moteur régulé en N2 et fourni par au moins un premier doseur de carburant (22) piloté en fonction d'une consigne de débit transmise par au moins un premier système de régulation (12) dépendant de la vitesse de rotation N2 dudit au moins un premier arbre de sortie (5),
   - identification (32, 42) d'un moteur dit non régulé en N2' (3) parmi lesdits au moins deux moteurs (2, 3), ledit moteur non régulé en N2' (3) étant identifié comme un moteur alimenté en carburant avec un débit de carburant non régulé en fonction de la vitesse de rotation N2' d'un second arbre de sortie (6) et fourni par un second doseur de carburant (23) étant soit non régulé, soit piloté en fonction d'une consigne de débit transmise par au moins un second système de régulation (13) indépendant de la vitesse de rotation N2' dudit second arbre de sortie (6),
   - détermination (33, 43) d'au moins une première limite de couple d'entrée (E1) admissible pour au moins un premier accouplement (25) dudit système de transmission (4) relié audit au moins un premier arbre de sortie (5),
   - détermination (34, 44) d'une seconde limite de couple d'entrée (E2) admissible pour un second accouplement (26) dudit système de transmission (4) relié audit second arbre de sortie (6),
   - détermination (35, 45) d'un premier couple courant de fonctionnement (C1) transmis par ledit second arbre de sortie (6) audit second accouplement (26) dudit système de transmission (4),
   - détermination (36, 46) d'au moins une limite de couple combinée résiduelle (CR1) admissible pour au moins un organe d'un combinateur (7) dudit système de transmission (4), ladite au moins une limite de couple combinée résiduelle (CR1) étant calculée selon la formule :

   $$CR1 = \mathrm{Cadm} - (\mathrm{C1} * \mathrm{Z})$$

   où Cadm est une limite de couple combinée admissible pour ledit au moins un organe dudit combinateur (7),
   C1 est ledit premier couple courant de fonctionnement transmis par ledit second arbre de sortie (6) audit second accouplement (26) dudit système de transmission, et
   Z un coefficient de réduction entre une vitesse de rotation dudit second accouplement (26) et une vitesse de rotation dudit au moins un organe dudit combinateur (7),

   - identification (37, 47) d'une limite critique de couple (CC1) comme étant la plus petite des valeurs parmi lesdites au moins une première limite de couple d'entrée (E1), seconde limite de couple d'entrée (E2) et au moins une limite de couple combinée résiduelle (CR1),
   - génération (38, 48) d'une limite de consigne de commande (COM) dudit au moins un premier système de régulation (12), ladite limite de consigne de commande (COM) étant générée en fonction de ladite limite critique de couple (CC1).

2. Procédé de contrôle selon la revendication 1,
   **caractérisé en ce que**, préalablement à ladite identification (32) d'un moteur non régulé en N2' (3), ledit moteur non régulé en N2' (3) est initialement un moteur régulé en N2' qui est alimenté en carburant avec un débit de carburant régulé en N2' fourni par ledit second doseur de carburant (23) piloté en fonction d'une consigne de débit transmise par un second système de régulation (13).

3. Procédé de contrôle selon la revendication 2,
   **caractérisé en ce que** ladite identification (32) d'un moteur non régulé en N2' (3) est une identification d'une défaillance dudit second système de régulation (13).

4. Procédé de contrôle selon l'une quelconque des revendications 1 à 3, **caractérisé en ce que** ladite limite de consigne de commande (COM) est générée pour qu'un second couple courant de fonctionnement (C2) transmis par ledit au moins un premier arbre de sortie (5) audit au moins un premier accouplement (25) dudit système de transmission (4) soit maintenu égal ou inférieur à ladite limite critique de couple (CC1).

5. Procédé de contrôle selon l'une quelconque des revendications 1 à 4, **caractérisé en ce que**, lorsque ladite limite critique de couple (CC1) est une desdites au moins une première limite de couple d'entrée (E1) et seconde limite de couple d'entrée (E2), ledit au moins un premier système de régulation (12) régule le débit de carburant fourni par ledit au moins un premier doseur de carburant (22) en fonction d'une première consigne de vitesse de rotation (Nrref1) d'au moins un rotor de sustentation (16) dudit giravion (1).

6. Procédé de contrôle selon la revendication 5, **caractérisé en ce que**, lorsque ladite limite critique de couple (CC1) est ladite au moins une limite de couple combinée résiduelle (CR1), ledit au moins un premier système de régulation (12) régule le débit de carburant fourni par ledit au moins un premier doseur de carburant (22) en fonction d'une seconde consigne de vitesse de rotation (Nrref2) dudit au moins un rotor de sustentation (16) dudit giravion (1), ladite seconde consigne de vitesse de rotation (Nrref2) étant inférieure à ladite première consigne de vitesse de rotation (Nrref1).

7. Procédé de contrôle selon l'une quelconque des revendications 1 à 6, **caractérisé en ce que**, lorsque ladite limite critique de couple (CC1) est une desdites au moins une première limite de couple d'entrée (E1) et seconde limite de couple d'entrée (E2), ledit procédé (30) comporte les étapes suivantes :

   - génération (391) d'une information (KOEI) représentative d'un premier régime de fonctionnement (OEI) , et
   - affichage (392) sur un afficheur (8) d'au moins un premier indicateur de limite (91, 92) correspondant audit premier régime de fonctionnement (OEI).

8. Procédé de contrôle selon la revendication 7, **caractérisé en ce qu'**une valeur de ladite limite critique de couple (CC1) est affectée à un premier indicateur de limite (91) parmi ledit au moins un premier indicateur de limite (91, 92).

9. Procédé de contrôle selon l'une quelconque des revendications 1 à 6, **caractérisé en ce que**, lorsque ladite limite critique de couple (CC1) est ladite limite de couple combinée résiduelle (CR1), ledit procédé (40) peut comporter les étapes suivantes :

   - génération (491) d'une information (KAEO) représentative d'un second régime de fonctionnement (AEO), et
   - affichage (492) sur un afficheur (8) d'au moins un second indicateur de limite (191, 192) correspondant audit second régime fonctionnement (AEO).

10. Procédé de contrôle selon les revendications 7 et 9, **caractérisé en ce que** ledit procédé (30, 40) comporte les étapes suivantes :

    - détermination préliminaire (300, 400) de valeurs de seuil (SAEO, SOEI) desdits au moins un premier indicateur de limite (9) et d'au moins un second indicateur de limite (19), et
    - mémorisation (301, 401) desdites valeurs de seuil (SAEO, SOEI) dans au moins une mémoire (14).

11. Procédé de contrôle selon l'une quelconque des revendications 1 à 10, **caractérisé en ce que**, ledit giravion (1) comportant un système de pilotage automatique (15) et au moins un rotor de sustentation (16) muni de pales (17), ledit procédé (30, 40) comporte un calcul (393, 493) d'une marge de pas collectif (MPC) applicable auxdites pales (17) et un contrôle (394, 494) d'un pas collectif (PC) desdites pales (17) pour piloter automatiquement ledit giravion (1) en respectant ladite au moins une limite critique de couple (CC1).

12. Giravion (1) comportant au moins deux moteurs (2, 3) à combustion, au moins un système de régulation (13) et un système de transmission (4), lesdits au moins deux moteur (2, 3) étant reliés mécaniquement audit système de transmission (4) respectivement par au moins deux accouplements (25, 26), **caractérisé en ce que** ledit giravion (1) comporte un système de contrôle (10) configuré pour mettre en œuvre ledit procédé de contrôle (30, 40) selon l'une quelconque des revendications 1 à 11.

13. Programme d'ordinateur comprenant des instructions qui, lorsque ledit programme est exécuté par ledit système de contrôle (10) du giravion selon la revendication 12, conduisent à mettre en œuvre le procédé de contrôle selon l'une quelconque des revendications 1 à 11.

**Patentansprüche**

1. Verfahren zum Steuern (30, 40) eines Drehflüglers (1), wobei der Drehflügler (1) mindestens zwei Verbrennungsmotoren (2, 3), mindestens ein Regelsystem (12, 13) und ein Getriebesystem (4) umfasst, wobei die mindestens zwei Motoren (2, 3) jeweils über mindestens zwei Kupplungen (25, 26) mechanisch mit dem Getriebesystem (4) verbunden sind,

   **dadurch gekennzeichnet, dass** das Steuerverfahren (30, 40) mindestens die folgenden Schritte umfasst:

   - Identifizieren (31, 41) mindestens eines als N2-geregelter Motor (2) bezeichneten Motors unter den mindestens zwei Motoren (2, 3), wobei der mindestens eine N2-geregelte Motor (2) als ein Motor identifiziert wird, der mit Kraftstoff versorgt wird, dessen Durchsatz in Abhängigkeit von der Drehzahl N2 mindestens einer ersten Abtriebswelle (5) des mindestens einen N2-geregelten Motors geregelt ist und von mindestens einem ersten Kraftstoffdosierer (22) bereitgestellt wird, der in Abhängigkeit von einem Durchsatzsollwert gesteuert wird, der von mindestens einem ersten Regelsystem (12) übertragen wird, das von der Drehzahl N2 der mindestens einen ersten Abtriebswelle (5) abhängt,

   - Identifizieren (32, 42) eines als nicht N2'-geregelter Motor (3) bezeichneten Motors unter den mindestens zwei Motoren (2, 3), wobei der nicht N2'-geregelte Motor (3) als ein Motor identifiziert wird, der mit einem Kraftstoffdurchfluss versorgt wird, der nicht in Abhängigkeit von der Drehzahl N2' einer zweiten Abtriebswelle (6) geregelt ist und von einem zweiten Kraftstoffdosierer (23) bereitgestellt wird, der entweder ungeregelt ist oder in Abhängigkeit von einem Sollwert gesteuert wird, der von mindestens einem zweiten Regelsystem (13) übertragen wird, das unabhängig von der Drehzahl N2' der besagten zweiten Abtriebswelle (6) ist,

   - Bestimmen (33, 43) mindestens einer ersten zulässigen Eingangsdrehmomentgrenze (E1) für mindestens eine erste Kupplung (25) des Getriebesystems (4), die mit der mindestens einen ersten Abtriebswelle (5) verbunden ist,

   - Bestimmen (34, 44) einer zweiten zulässigen Eingangsdrehmomentgrenze (E2) für eine zweite Kupplung (26) des Getriebesystems (4), die mit der zweiten Abtriebswelle (6) verbunden ist,

   - Bestimmen (35, 45) eines ersten Betriebsdrehmoments (C1), das von der zweiten Abtriebswelle (6) auf die zweite Kupplung (26) des Getriebesystems (4) übertragen wird,

   - Bestimmen (36, 46) mindestens einer zulässigen kombinierten Restdrehmomentgrenze (CR1) für mindestens ein Element eines Kombinators (7) des Getriebesystems (4), wobei die mindestens eine kombinierte Restdrehmomentgrenze (CR1) nach der

   Formel

   $$CR1 = Cadm - (Cl * Z)$$

   berechnet wird, wobei

   Cadm eine zulässige kombinierte Drehmomentgrenze für das mindestens eine Element des Kombinators (7) ist,

   C1 das von der zweiten Abtriebswelle (6) auf die zweite Kupplung (26) des Getriebesystems übertragene erste Betriebsdrehmoment ist und

   Z ein Untersetzungsfaktor zwischen einer Drehzahl der zweiten Kupplung (26) und einer Drehzahl des mindestens einen Elements des Kombinators (7) ist,

   - Identifizieren (37, 47) einer kritischen Drehmomentgrenze (CC1) als den kleinsten Wert unter der mindestens einen ersten Eingangsdrehmomentgrenze (E1), der zweiten Eingangsdrehmomentgrenze (E2) und der mindestens einen kombinierten Restdrehmomentgrenze (CR1),

   - Erzeugen (38, 48) einer Steuersollwertgrenze (COM) des mindestens einen ersten Regelsystems (12), wobei die Steuersollwertgrenze (COM) in Abhängigkeit von der kritischen Drehmomentgrenze (CC1) erzeugt wird.

**2.** Steuerverfahren nach Anspruch 1,
**dadurch gekennzeichnet, dass** vor dem Identifizieren (32) eines nicht N2'-geregelten Motors (3) der nicht N2'-geregelte Motor (3) zunächst ein N2'-geregelter Motor ist, der mit einem N2'-geregelten Kraftstoffdurchsatz von dem zweiten Kraftstoffdosierer (23) versorgt wird, der in Abhängigkeit von einem von einem zweiten Regelsystem (13) übermittelten Durchsatzsollwert gesteuert wird.

**3.** Steuerverfahren nach Anspruch 2,
**dadurch gekennzeichnet, dass** das Identifizieren (32) eines nicht N2'-geregelten Motors (3) ein Identifizieren einer Störung des zweiten Regelsystems (13) ist.

**4.** Steuerverfahren nach einem der Ansprüche 1 bis 3,
**dadurch gekennzeichnet, dass** die Steuersollwertgrenze (COM) so erzeugt wird, dass ein zweites aktuelles Betriebsdrehmoment (C2), das von der mindestens einen ersten Abtriebswelle (5) an die mindestens eine erste Kupplung (25) des Getriebesystems (4) übertragen wird, gleich oder kleiner als die kritische Drehmomentgrenze (CC1) gehalten wird.

**5.** Steuerverfahren nach einem der Ansprüche 1 bis 4,
**dadurch gekennzeichnet, dass**, wenn die kritische Drehmomentgrenze (CC1) die mindestens eine erste Eingangsdrehmomentgrenze (E1) oder die zweite Eingangsdrehmomentgrenze (E2) ist, das mindestens eine erste Regelsystem (12) die von dem mindestens einen ersten Kraftstoffdosierer (22) gelieferte Kraftstoffmenge in Abhängigkeit von einem ersten Drehzahlsollwert (Nrref1) mindestens eines Hubrotors (16) des Drehflüglers (1) regelt.

**6.** Steuerverfahren nach Anspruch 5,

**dadurch gekennzeichnet, dass**, wenn die kritische Drehmomentgrenze (CC1) die mindestens eine kombinierte Restdrehmomentgrenze (CR1) ist,
das mindestens eine erste Regelsystem (12) die von dem mindestens einen ersten Kraftstoffdosierer (22) gelieferte Kraftstoffmenge in Abhängigkeit von einem zweiten Drehzahlsollwert (Nrref2) des mindestens einen Hubrotors (16) des Hubschraubers (1) regelt, wobei der zweite Drehzahlsollwert (Nrref2) niedriger ist als der erste Drehzahlsollwert (Nrref1).

**7.** Steuerverfahren nach einem der Ansprüche 1 bis 6,
**dadurch gekennzeichnet, dass**, wenn die kritische Drehmomentgrenze (CC1) die mindestens eine erste Eingangsdrehmomentgrenze (E1) oder die zweite Eingangsdrehmomentgrenze (E2) ist, das Verfahren (30) die folgenden Schritte umfasst:

- Erzeugen (391) einer Information (KOEI), die einen ersten Betriebszustand (OEI) repräsentiert, und
- Anzeigen (392) mindestens einer dem ersten Betriebszustand (OEI) entsprechenden ersten Grenzwertanzeige (91, 92) auf einem Anzeigeinstrument (8).

**8.** Steuerverfahren nach Anspruch 7,
**dadurch gekennzeichnet, dass** ein Wert der kritischen Drehmomentgrenze (CC1) einer ersten Grenzwertanzeige (91) unter den mindestens eins ersten Grenzwertanzeigen (91, 92) zugewiesen wird.

**9.** Steuerverfahren nach einem der Ansprüche 1 bis 6,
**dadurch gekennzeichnet, dass**, wenn die kritische Drehmomentgrenze (CC1) die kombinierte Restdrehmomentgrenze (CR1) ist, das Verfahren (40) die folgenden Schritte umfassen kann:

- Erzeugen (491) einer Information (KAEO), die einen zweiten Betriebszustand (AEO) repräsentiert, und
- Anzeigen (492) mindestens einer dem zweiten Betriebszustand (AEO) entsprechenden zweiten Grenzwertanzeige (191, 192) auf einem Anzeigeinstrument (8).

**10.** Steuerverfahren nach den Ansprüchen 7 und 9,
**dadurch gekennzeichnet, dass** das Verfahren (30, 40) die folgenden Schritte umfasst:

- vorläufiges Bestimmen (300, 400) von Schwellenwerten (SAEO, SOEI) der mindestens einen ersten Grenzwertanzeige (9) und der mindestens einen zweiten Grenzwertanzeige (19), und

- Speichern (301, 401) der Schwellenwerte (SAEO, SOEI) in mindestens einem Speicher (14).

11. Steuerverfahren nach einem der Ansprüche 1 bis 10,
    **dadurch gekennzeichnet, dass** der Drehflügler (1) ein Autopilotsystem (15) und mindestens einen mit Blättern (17) versehenen Tragrotor (16) umfasst, wobei das Verfahren (30, 40) ein Berechnen (393, 493) eines auf die Blätter (17) anwendbaren kollektiven Blattwinkelbereichs (MPC) und ein Steuern (394, 494) eines kollektiven Blattwinkels (PC) der Blätter (17) umfasst, um den Drehflügler (1) unter Einhaltung der mindestens einen kritischen Drehmomentgrenze (CC1) automatisch zu steuern.

12. Drehflügler (1) mit mindestens zwei Verbrennungsmotoren (2, 3), mindestens einem Regelsystem (13) und einem Getriebesystem (4), wobei die mindestens zwei Motoren (2, 3) jeweils über mindestens zwei Kupplungen (25, 26) mechanisch mit dem Getriebesystem (4) verbunden sind,
    **dadurch gekennzeichnet, dass** der Drehflügler (1) ein Steuersystem (10) umfasst, das konfiguriert ist, um das Steuerverfahren (30, 40) nach einem der Ansprüche 1 bis 11 durchzuführen.

13. Computerprogramm mit Befehlen, die, wenn das Programm von dem Steuersystem (10) des Drehflüglers nach Anspruch 12 ausgeführt wird, bewirken, dass das Steuerverfahren nach einem der Ansprüche 1 bis 11 durchgeführt wird.

## Claims

1. Method for controlling (30, 40) a rotorcraft (1), said rotorcraft (1) comprising at least two combustion engines (2, 3), at least one regulation system (12, 13) and a transmission system (4), said at least two engines (2, 3) being mechanically connected to said transmission system (4) respectively by at least two couplings (25, 26),
   **characterised in that** the control method (30, 40) comprises at least the following steps:

   - identification (31, 41) of at least one so-called N2-regulated engine (2) among said at least two engines (2, 3), said at least one N2-regulated engine (2) being identified as an engine supplied with fuel with a fuel flow rate regulated as a function of the rotational speed N2 of at least one first output shaft (5) of said at least one N2-regulated engine and supplied by at least one first fuel metering device (22) piloted as a function of a flow rate setpoint transmitted by at least one first regulation system (12) dependent on the rotational speed N2 of said at least one first output shaft (5),
   - identification (32, 42) of a so-called non-regulated N2' engine (3) among said at least two engines (2, 3), said non-regulated N2' engine (3) being identified as an engine supplied with fuel with a non-regulated fuel flow rate as a function of the rotation speed N2' of a second output shaft (6) and provided by a second fuel metering device (23) being either non-regulated or piloted as a function of a flow rate setpoint transmitted by at least one second regulation system (13) independent of the rotation speed N2' of said second output shaft (6),
   - determination (33, 43) of at least a first permissible input torque limit (E1) for at least one first coupling (25) of said transmission system (4) connected to said at least one first output shaft (5),
   - determination (34, 44) of a second permissible input torque limit (E2) for a second coupling (26) of said transmission system (4) connected to said second output shaft (6),
   - determination (35, 45) of a first current operating torque (C1) transmitted by said second output shaft (6) to said second coupling (26) of said transmission system (4),
   - determination (36, 46) of at least one permissible residual combined torque limit (CR1) for at least one member of a combiner (7) of said transmission system (4), said at least one residual combined torque limit (CR1) being calculated according to the formula:

   $$CR1 = \text{Cadm} - (C1 * Z)$$

   wherein Cadm is a permissible combined torque limit for said at least one member of said combiner (7),
   C1 is said first current operating torque transmitted by said second output shaft (6) to said second coupling (26) of said transmission system, and
   Z a reduction coefficient between a rotational speed of said second coupling (26) and a rotational speed of said at least one member of said combiner (7),

   - identification (37, 47) of a critical torque limit (CC1) as being the smallest of the values among said at least one first input torque limit (E1), second input torque limit (E2) and at least one residual combined torque limit (CR1),
- generation (38, 48) of a control setpoint limit (COM) of said at least one first regulation system (12), said control setpoint limit (COM) being generated as a function of said critical torque limit (CC1).

2. Control method according to claim 1,
   **characterised in that**, prior to said identification (32) of a non-regulated N2' engine (3), said non-regulated N2' engine (3) is initially a regulated N2' engine which is supplied with fuel with a regulated N2' fuel flow rate provided by said second fuel metering device (23) piloted as a function of a flow rate setpoint transmitted by a second regulation system (13).

3. Control method according to claim 2,
   **characterised in that** said identification (32) of a non-regulated N2' engine (3) is an identification of a failure of said second regulation system (13).

4. Control method according to any one of claims 1 to 3,
   **characterised in that** said control setpoint limit (COM) is generated such that a second current operating torque (C2) transmitted by said at least one first output shaft (5) to said at least one first coupling (25) of said transmission system (4) is kept equal to or less than said critical torque limit (CC1).

5. Control method according to any one of claims 1 to 4,
   **characterised in that**, when said critical torque limit (CC1) is one of said at least one first input torque limit (E1) and second input torque limit (E2), said at least one first regulation system (12) regulates the flow rate of fuel supplied by said at least one first fuel metering device (22) as a function of a first rotation speed setpoint (Nrref1) of at least one lift rotor (16) of said rotorcraft (1).

6. Control method according to claim 5,
   **characterised in that**, when said critical torque limit (CC1) is said at least one residual combined torque limit (CR1), said at least one first regulation system (12) regulates the flow rate of fuel supplied by said at least one first fuel metering device (22) as a function of a second rotational speed setpoint (Nrref2) of said at least one lift rotor (16) of said rotorcraft (1), said second rotational speed setpoint (Nrref2) being less than said first rotational speed setpoint (Nrrefl).

7. Control method according to any one of claims 1 to 6,
   **characterised in that**, when said critical torque limit (CC1) is one of said at least one first input torque limit (E1) and second input torque limit (E2), said method (30) comprises the following steps:

   - generation (391) of information (KOEI) representative of a first operating speed (OEI) , and
   - displaying (392) on a display unit (8) of at least one first limit indicator (91, 92) corresponding to said first operating speed (OEI).

8. Control method according to claim 7,
   **characterised in that** a value of said critical torque limit (CC1) is assigned to a first limit indicator (91) among said at least one first limit indicator (91, 92).

9. Control method according to any one of claims 1 to 6,
   **characterised in that**, when said critical torque limit (CC1) is said residual combined torque limit (CR1), said method (40) can comprise the following steps:

   - generation (491) of information (KAEO) representative of a second operating speed (AEO), and
   - displaying (492) on a display unit (8) of at least one second limit indicator (191, 192) corresponding to said second operating speed (AEO)

10. Control method according to claims 7 and 9,
    **characterised in that** said method (30, 40) comprises the following steps:

    - preliminary determination (300, 400) of threshold values (SAEO, SOEI) of said at least one first limit indicator (9) and of at least one second limit indicator (19), and
    - storing (301, 401) of said threshold values (SAEO, SOEI) in at least one memory (14).

11. Control method according to any one of claims 1 to 10,
 **characterised in that**, said rotorcraft (1) comprising an automatic piloting system (15) and at least one lift rotor (16) equipped with blades (17), said method (30, 40) comprises a calculation (393, 493) of a collective pitch margin (MPC) applicable to said blades (17) and a control (394, 494) of a collective pitch (PC) of said blades (17) to automatically pilot said rotorcraft (1) while respecting said at least one critical torque limit (CC1).

12. Rotorcraft (1) comprising at least two combustion engines (2, 3), at least one regulation system (13) and a transmission system (4), said at least two engines (2, 3) being mechanically connected to said transmission system (4) respectively by at least two couplings (25, 26),
 **characterised in that** said rotorcraft (1) comprises a control system (10) configured to implement said control method (30, 40) according to any one of claims 1 to 11.

13. Computer program comprising instructions which, when said program is executed by said rotorcraft control system (10) according to claim 12, lead to implementing the control method according to any one of claims 1 to 11.

# Fig.1

# Fig.2

**Fig.3**

SAEO
SOEI — 300

— 301

— 31

— 32

35 — Cm

33 — E₁

30

36 — CR1

E₂ — 34

CC1 — 37

COM — 38

KOEI — 391

— 392

MPC — 393

PC — 394

**Fig.4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2019382124 A
- US 2014283527 A
- US 2016221685 A
- EP 3251955 A
- US 2013054053 A